(19) Europäisches Patentamt
European Patent Office
Office européen des brevets

(11) **EP 3 885 153 A1**

(12) **EUROPÄISCHE PATENTANMELDUNG**

(43) Veröffentlichungstag:
**29.09.2021   Patentblatt 2021/39**

(21) Anmeldenummer: **21020217.2**

(22) Anmeldetag: **25.04.2018**

(51) Int Cl.:
**B42D 25/425** (2014.01)   **B42D 25/45** (2014.01)
**B42D 25/324** (2014.01)   **B42D 25/328** (2014.01)
**B42D 25/373** (2014.01)   **B42D 25/23** (2014.01)
**B42D 25/24** (2014.01)   **B42D 25/29** (2014.01)
**G02B 5/09** (2006.01)   **G02B 30/00** (2020.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.04.2017   DE 102017004065**

(62) Dokumentnummer(n) der früheren Anmeldung(en) nach Art. 76 EPÜ:
**18721952.2 / 3 615 349**

(71) Anmelder: **Giesecke+Devrient Currency Technology GmbH**
**81677 München (DE)**

(72) Erfinder: **Scherer, Kai Herrmann**
**82491 Grainau (DE)**

Bemerkungen:
Diese Anmeldung ist am 19-04-2021 als Teilanmeldung zu der unter INID-Code 62 erwähnten Anmeldung eingereicht worden.

(54) **VERFAHREN ZUR HERSTELLUNG EINES SICHERHEITSELEMENTS**

(57)   Die Erfindung betrifft ein Verfahren zur Herstellung eines Sicherheitselements (12) mit einem reflektiven Flächenbereich (16), der für einen Betrachter als dreidimensionales Reliefmotiv (14) mit einer gegenüber seiner tatsächlichen Raumform vor- und/ oder zurückspringenden Oberfläche in Form eines dreidimensionalen Bildmotivs wahrnehmbar ist, bei dem
- in einer x-y-Ebene ein erstes zweidimensionales Teilbild (20) mit einer flächigen Projektion (22) des Bildmotivs und ein zweites zweidimensionales Teilbild (24) mit feinen Konturlinien innerhalb der Projektion des Bildmotivs erzeugt werden,
- für das erste Teilbild (20) für die flächige Projektion (22) des Bildmotivs eine Grobwölbung G(x,y) vorgegeben wird, aus der Grobwölbung G(x,y) eine lokale Spiegelsteigung SG(x,y) bestimmt wird,
- für das zweite Teilbild (24) für jede der feinen Konturlinien (26) eine Feinwölbung fi(x,y) vorgegeben wird, wobei i=1...N ist, und N die Anzahl der vorgegebenen feinen Konturlinien (26) ist, aus der Feinwölbung fi(x,y) eine lokale Spiegelsteigung $S_{fi}(x,y)$ bestimmt wird,
- aus der lokalen Spiegelsteigung $S_G(x, y)$ und den lokalen Spiegelsteigungen $S_{fi}(x, y)$ eine lokale Spiegelsteigung $S_R(x,y)$ des Reliefs

$$S_R(x,y) = M[S_G(x,y), S_{fi}(x,y)]$$

mit einem Masterfunktional M berechnet wird, das eine Verknüpfung der lokalen Spiegelsteigung $S_G(x, y)$ und der N lokalen Spiegelsteigungen $S_{fi}(x, y$, mit i=1...N, beschreibt, und
- ein reflektiver Flächenbereich (16) mit einer Vielzahl an geneigten reflektiven Mikrospiegeln (18) mit einer lokalen Spiegelsteigung $S_R(x,y)$ erzeugt wird.

Fig. 2

**Beschreibung**

Die Erfindung betrifft ein Verfahren zur Herstellung eines Sicherheitselements mit einem reflektiven Flächenbereich, der für einen Betrachter als dreidimensionales Reliefmotiv mit einer gegenüber seiner tatsächlichen Raumform vor- und/oder zurückspringende Oberfläche in Form eines vorgegebenen dreidimensionalen Bildmotivs wahrnehmbar ist.

Datenträger, wie etwa Wert- oder Ausweisdokumente, oder andere Wertgegenstände, wie etwa Markenartikel oder Münzen, werden zur Absicherung oft mit Sicherheitselementen versehen, die eine Überprüfung der Echtheit der Datenträger gestatten und die zugleich als Schutz vor unerlaubter Reproduktion dienen. Eine besondere Rolle bei der Echtheitsabsicherung spielen Sicherheitselemente mit einem betrachtungswinkelabhängigen oder dreidimensionalen Erscheinungsbild, da diese selbst mit modernsten Kopiergeräten nicht reproduziert werden können.

Dreidimensional erscheinende Darstellungen können beispielsweise mit folienbasierten Sicherheitselementen mit Mikrospiegeln erzeugt werden, wie etwa in der Druckschrift WO 2011/066990 A2 beschrieben. Die Mikrospiegelanordnung simuliert dabei das Reflexionsverhalten einer vorgegebenen gekrümmten Oberfläche, so dass sich beispielsweise Wertzahlen oder Symbole in einer visuell attraktiven Weise darstellen lassen. Komplexere Objekte wirken bei einer solchen Darstellung allerdings oft relativ grob, abstrahiert und weichgezeichnet und hinterlassen einen wenig realistischen visuellen Eindruck.

Ausgehend davon liegt der Erfindung die Aufgabe zugrunde, ein Verfahren der eingangs genannten Art anzugeben, das die Nachteile des Standes der Technik vermeidet und das auf schnelle und einfache Weise die Herstellung von Sicherheitselementen mit realistischen und detailreichen reflektiven Wölbdarstellungen ermöglicht.

Diese Aufgabe wird durch die Merkmale der unabhängigen Ansprüche gelöst. Weiterbildungen der Erfindung sind Gegenstand der abhängigen Ansprüche.

Gemäß der Erfindung ist bei einem gattungsgemäßen Verfahren vorgesehen, dass

- aus dem vorgegebenen dreidimensionalen Bildmotiv in einer x-y-Ebene ein erstes zweidimensionales Teilbild mit einer flächigen Projektion des Bildmotivs und ein zweites zweidimensionales Teilbild mit feinen Konturlinien innerhalb der Projektion des Bildmotivs erzeugt werden,

- für das erste Teilbild für die flächige Projektion des Bildmotivs eine Grobwölbung $G(x,y)$ vorgegeben wird,

- für das zweite Teilbild für jede der feinen Konturlinien eine Feinwölbung $f_i(x,y)$ vorgegeben wird, wobei $i=1...N$ ist, und $N$ die Anzahl der vorgegebenen feinen Konturlinien ist,

- aus der Grobwölbung $G(x,y)$ und den Feinwölbungen $f_i(x,y)$ eine Reliefwölbung

$$R(x,y) = M[G(x,y), f_i(x,y)]$$

mit einem Masterfunktional $M$ berechnet wird, das eine Verknüpfung der Grobwölbung $G(x,y)$ und der $N$ Feinwölbungen $f_i(x,y)$, mit $i=1...N$, beschreibt, und

- ein reflektiver Flächenbereich mit einer Vielzahl an geneigten reflektiven Mikrospiegeln mit einer jeweils durch die Reliefwölbung $R(x,y)$ bestimmten lokalen Spiegelsteigung erzeugt wird.

Die vorgegebenen feinen Konturlinien können dabei alle durch gleich ausgebildete Feinwölbungen dargestellt werden. Insbesondere können alle vorgegebenen feinen Konturlinien durch Feinwölbungen in Form einer schmalen Zylinderkalotte, also eines Schnitts eines Zylinders in einer Ebene parallel zur Zylinderachse, beispielsweise eines Halbzylinders, ausgebildet sein. Eine solche Zylinderkalotte erstreckt sich vorteilhaft jeweils mit einer bestimmten, vorzugsweise konstanten, Breite entlang des Linienverlaufs der Konturlinie.

Die Feinwölbungen der Konturlinien können allerdings auch unterschiedlich ausgebildet sein, beispielsweise können zwei oder mehrere Konturlinienarten mit unterschiedlicher Breite und/oder unterschiedlichem Querschnittsprofil vorgesehen sein, um dickere und dünnere Konturlinien bzw. visuell unterschiedlich wirkende Konturlinien darzustellen.

Mit Vorteil wird für das erste Teilbild zumindest in einem Teilgebiet eine Grobwölbung $G(x,y)$ vorgegeben, die für jeden Schnitt $x=const$ und $y=const$ höchstens zwei Extrema, vorzugsweise sogar nur höchstens ein Extremum aufweist. Eine solche Grobwölbung hat eine einfach zu behandelnde Struktur und verleiht dem Bildmotiv eine klare, sich über den gesamten Projektionsbereich erstreckende globale Wölbung.

Bei einer weiteren vorteilhaften Ausgestaltung wird die flächige Projektion des Bildmotivs durch eine Kurvendarstellung mit einer Vorgabekurve gebildet, wobei für das erste Teilbild eine Grobwölbung $G(x,y)$ vorgegeben wird, die für jeden Schnitt senkrecht zur Vorgabekurve der Kurvendarstellung höchstens zwei Extrema, vorzugsweise höchstens ein Extremum aufweist. Als Vorgabekurve zeigt die Kurvendarstellung vorzugsweise alphanumerische Zeichen, Symbole oder geometrische Formen, insbesondere einen Kreis, ein Oval, ein Dreieck, ein Rechteck, ein Sechseck oder eine Sternform.

Die Breite der für das zweite Teilbild vorgegebenen feinen Konturlinien wird mit Vorteil kleiner als 30%, bevorzugt kleiner als 25%, besonders bevorzugt kleiner als 10%, und insbesondere kleiner als 5% des größten Durchmessers der flächigen Projektion des ersten Teilbilds gewählt.

Die Wölbweite der Feinwölbungen fi(x,y) wird mit Vorteil kleiner als 30%, bevorzugt kleiner als 25%, besonders bevorzugt kleiner als 10%, und insbesondere kleiner als 5% der Wölbweite der Grobwölbung G(x,y) gewählt.

In einer bevorzugten Ausgestaltung werden die Mikrospiegel in dem reflektiven Flächenbereich in einem periodischen Raster mit einer Periodenlänge zwischen 4 $\mu$m und 100 $\mu$m, vorzugsweise zwischen 5 $\mu$m und 30 $\mu$m erzeugt. Die Kantenlänge der Mikrospiegel entspricht vorzugsweise der Periodenlänge, liegt also ebenfalls zwischen 4 $\mu$m und 100 $\mu$m, vorzugsweise zwischen 5 $\mu$m und 30 $\mu$m. Die Ganghöhe der Mikrospiegel ist vorzugsweise kleiner als 20 $\mu$m, insbesondere kleiner als 10 $\mu$m.

Die Mikrospiegel werden mit Vorteil als Reliefstruktur in einer Prägelackschicht oder einer prägbaren Folie erzeugt und die Reliefstruktur wird vorteilhaft mit einer Reflexionsschicht versehen. Als Reflexionsschicht kommt sowohl eine einfache Metallbeschichtung als auch eine Mehrfachschicht, beispielsweise eine Farbkipp-Beschichtung in Frage, welche aus einer halbtransparenten Metallschicht (Absorber), einer dielektrischen Abstandsschicht und einer darunter befindlichen metallischen Reflexionsschicht besteht.

Das oben genannte Masterfunktional M beschreibt eine Verknüpfung der für die Grobwölbung und die N Feinwölbungen vorgegebenen Funktionen und wird daher als Funktional bezeichnet. Beispielsweise kann die Reliefwölbung aus der Grobwölbung G(x,y) und den Feinwölbungen fi(x,y) mit der Beziehung

$$R(x,y) = a^*G(x,y) + b^*Sum_{i=1..N}[f_i(x,y)] \qquad (1)$$

bestimmt wird, wobei a und b reelle Parameter sind, für die zur Normierung vorzugsweise a+b=1 gilt. Das Masterfunktional M ist in diesem Fall eine gewichtete Summenfunktion $M[G, f_i] = a^*G + b^* Sum_i[f_i]$, wobei sich die Summe über alle N Feinwölbungen $f_i$ erstreckt.

Es ist natürlich auch möglich, dass die N Feinwölbungen mehrere Gruppen bilden, die durch das Masterfunktional M jeweils unterschiedlich gewichtet werden. Beispielsweise können k Feinwölbungen 1...k (welche etwa den Umriss des Bildmotivs beschreiben) mit einem ersten Gewichtsfaktor $b_1$ gewichtet werden und die restlichen N-k Feinwölbungen k+1... N (welche etwa Strukturen im Inneren des Bildmotivs beschreiben) mit einem zweiten Gewichtsfaktor $b_2 \neq b_1$ gewichtet werden:

$$R(x,y) = a^*G(x,y) + b_1^*Sum_{i=1..k}[f_i(x,y)] + b_2^*Sum_{i=k+1..N}[f_i(x,y)] \qquad (2)$$

wobei zur Normierung beispielsweise $a+b_1+b_2 =1$ oder $a+Max(b_1+b_2)=1$ verlangt werden kann. Durch die unterschiedlichen Gewichtsfaktoren treten dann die Umrisslinien und die Konturlinien im Inneren der Projektion unterschiedlich stark in Erscheinung. Es versteht sich, dass dieses Prinzip auch auf mehr als zwei Gruppen verallgemeinert werden kann. Neben der unterschiedlichen Gewichtung können sich die Feinwölbungen unterschiedlicher Gruppen natürlich auch in ihrer Breite und/oder ihrem Querschnitt unterscheiden.

Weiter können in unterschiedlichen Teilbereichen auch unterschiedliche Verknüpfungen von Grob- und Feinwölbungen verwendet werden. Beispielsweise kann in einem ersten Gebiet die Beziehung (1) mit a = b = 0,5 verwendet werden, während in einem zweiten Gebiet a=1 und b=0 oder eine andere von a=b=0,5 abweichende Parameterwahl verwendet wird.

Bei einer weiteren vorteilhaften Ausgestaltung wird die Reliefwölbung R(x,y) aus der Grobwölbung G(x,y) und den Feinwölbungen fi(x,y) mit der Beziehung

$$R(x,y) = (a^*G(x,y) - b^*Sum_{i=1..N}[f_i(x,y)])/maxR \qquad (3)$$

bestimmt, wobei a und b reelle positive Parameter sind und die Reliefwerte durch Division mit dem Maximalwert

$$maxR = Max_{x,y}[a^*G(x,y) - b^*Sum_{i=1..N}[f_i(x,y)]]$$

auf 1 normiert sind. Mit solchen Masterfunktionalen lässt sich der Eindruck reliefartiger Einprägungen erhalten, wie weiter unten genauer erläutert.

Weitere Ausführungsbeispiele sowie Vorteile der Erfindung werden nachfolgend anhand der Figuren erläutert, bei deren Darstellung auf eine maßstabs- und proportionsgetreue Wiedergabe verzichtet wurde, um die Anschaulichkeit zu erhöhen.

Es zeigen:

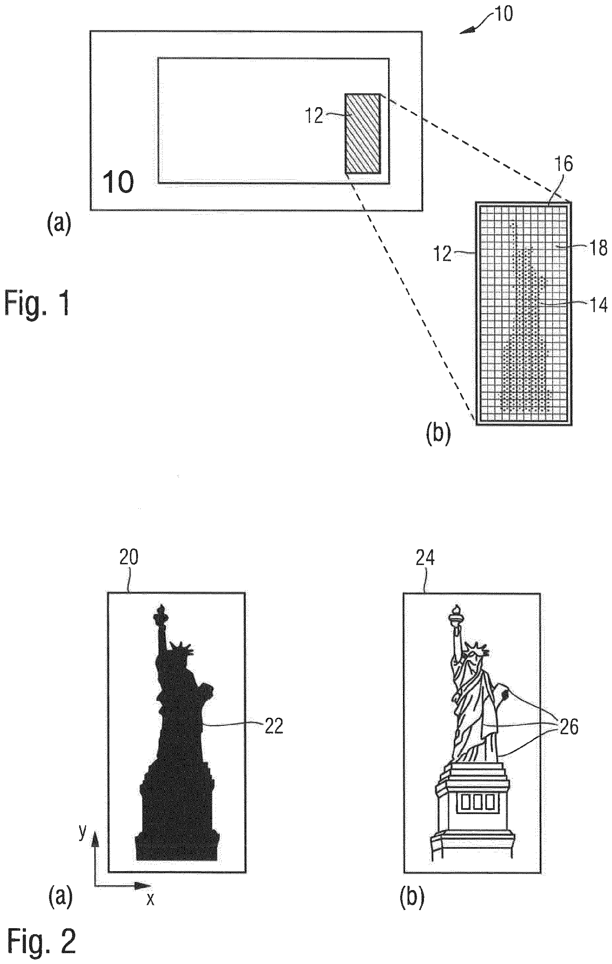

Fig.1 in (a) eine schematische Darstellung einer Banknote mit einem erfindungsgemäßen Sicherheitselement, das in (b) genauer dargestellt ist,

Fig. 2 die voneinander getrennten groben und feinen Bildanteile des vorgegebenen Bildmotivs "Statue", wobei (a) das erste zweidimensionale Teilbild mit einer flächigen Projektion des vorgegebenen Bildmotivs zeigt, und (b) das zweite zweidimensionale Teilbild mit einer Vielzahl feiner Konturlinien innerhalb der Projektion von (a) zeigt,

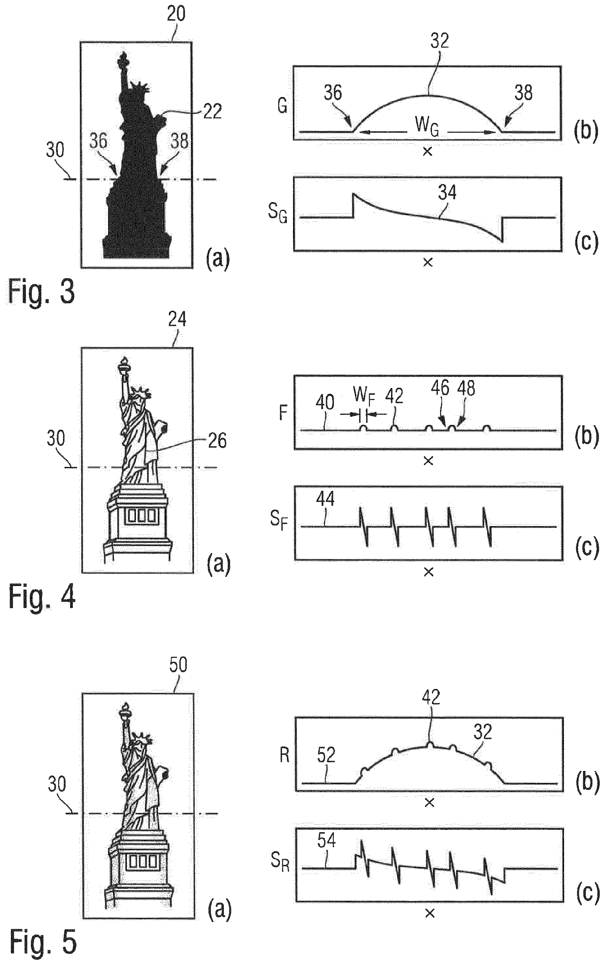

Fig. 3 in (a) das erste Teilbild mit der flächigen Projektion des Bild-motivs, in (b) die vorgegebene Grobwölbung G in x-Richtung entlang der in (a) gezeigten Schnittlinie, und in (c) die sich aus der Grobwölbung ergebenden Spiegelsteigungen $S_G$ in x-Richtung entlang der Schnittlinie von (a),

Fig. 4 in (a) das zweite Teilbild mit den feinen Konturlinien des Bild-motivs, in (b) die vorgegebene Gesamtfeinwölbung F in x-Richtung entlang der in (a) gezeigten Schnittlinie, und in (c) die sich aus der Gesamtfeinwölbung F ergebenden Spiegelsteigungen $S_F$ in x-Richtung entlang der Schnittlinie von (a), und

Fig. 5 in (a) das visuelle Erscheinungsbild des kombinierten Reliefmotivs R(x,y), in (b) die gesamte Reliefwölbung R in x-Richtung entlang der in (a) gezeigten Schnittlinie, und in (c) die sich aus der gesamten Reliefwölbung R ergebenden Spiegelsteigungen $S_R$ in x-Richtung entlang der Schnittlinie von (a).

Die Erfindung wird nun am Beispiel von Sicherheitselementen für Banknoten und andere Wertdokumente erläutert. Figur 1(a) zeigt dazu eine schematische Darstellung einer Banknote 10 mit einem erfindungsgemäßen Sicherheitselement 12, das in Fig. 1(b) genauer dargestellt ist. Das Sicherheitselement 12 zeigt bei Auflichtbetrachtung eine reflektive Wölbdarstellung einer Statue 14, die durch ihre nachfolgend genauer beschriebenen groben und filigranen Bildanteile ein sehr realistisches und detailreiches Erscheinungsbild zeigt.

Um dieses Erscheinungsbild zu erreichen, enthält das Sicherheitselement 12 einen reflektiven Flächenbereich 16 mit einer Vielzahl von kleinen, geneigten Mikrospiegeln 18, die in Fig. 1(b) zur Illustration schematisch eingezeichnet sind. In der Praxis liegen die Abmessungen der Mikrospiegel 18 unterhalb der Auflösungsgrenze des menschlichen Auges, so dass die Mikrospiegel 18 selbst nicht erkennbar sind. Beispielsweise weisen die Mikrospiegel 18 eine Kan-tenlänge von lediglich 10 $\mu$m und eine Ganghöhe von weniger als 10 $\mu$m auf. Die Mikrospiegel 18 können, wie in Fig. 1(b), regelmäßig in einem lückenlosen Raster oder auch unregelmäßig angeordnet sein.

Die laterale Ausdehnung des Flächenbereichs 16 definiert eine x-y-Ebene, die mit der Oberfläche der Banknote 10 zusammenfällt. Obwohl das Sicherheitselement 12 selbst sehr flach mit maximalen Höhendifferenzen von etwa 10 $\mu$m ausgebildet ist, zeigt es dem Betrachter in reflektiertem Licht durch die unterschiedliche lokale Neigung der kleinen Mikrospiegel 18 ein sich aus der Ebene herauswölbendes, dreidimensionales Bildmotiv (hier: Statue 14) mit einer gegenüber seiner tatsächlichen Raumform vor- und/oder zurückspringende Oberfläche.

Um nun das vorgegebene Bildmotiv "Statue" durch die Mikrospiegel 18 einerseits mit einem realistischen und detailreichen Erscheinungsbild darzustellen, und andererseits die Anordnung, also insbesondere die zur Nachstellung des Bildmotivs "Statue" erforderlichen lokalen Steigungen der Mikrospiegel 18 schnell und einfach zu ermitteln, kann erfindungsgemäß beispielsweise wie folgt vorgegangen werden:

Zunächst werden die groben (niederfrequenten) und feinen (hochfrequenten) Bildanteile des vorgegebenen Bildmotivs "Statue" voneinander getrennt, wobei konkret aus dem vorgegebenen dreidimensionalen Bildmotiv zwei zweidimensionale Teilbilder erzeugt werden, die jeweils nur die groben bzw. nur die feinen Bildanteile des Bildmotivs enthalten.

Übliche Bildmotive liegen auf Banknoten im Allgemeinen in einer Größe von 3 mm bis 20 mm vor. Feine Bildanteile weisen dabei sinnvollerweise eine laterale Ausdehnung von mindestens 80 $\mu$m und insbesondere oberhalb der Auflösungsgrenze des menschlichen Auges auf. Die Ausdehnung der feinen Bildanteile in einer Raumrichtung sollte außerdem deutlich kleiner sein als die Ausdehnung der groben Bildanteile, abhängig von der Gesamtausdehnung des Bildmotivs also beispielsweise kleiner als 2 mm bis 3 mm. Die groben Bildanteile weisen dann entsprechend eine laterale Ausdehnung oberhalb von 3 mm auf.

Mit Bezug auf Fig. 2(a) enthält das erste zweidimensionale Teilbild 20 in der x-y-Ebene eine flächige Projektion 22 des vorgegebenen Bildmotivs ohne irgendeine innere Struktur innerhalb der Projektion 22. Anschaulich gesprochen enthält das erste Teilbild 20 die Silhouette oder den Schattenwurf des vorgegebenen dreidimensionalen Bildmotivs und zeigt daher nur dessen grobe Bildanteile.

Das zweite zweidimensionale Teilbild 24 enthält mit Bezug auf Fig. 2(b) in der x-y-Ebene eine Vielzahl feiner Konturlinien 26 innerhalb der Projektion 22 des Bildmotivs und zeigt daher nur feine Bildanteile des vorgegebenen Bildmotivs. Die Konturlinien 26 können im einfachsten Fall das Bildmotiv und damit die Projektion 22 einfach umranden. In komplexeren Gestaltungen können die Konturlinien 26 eine innere Struktur im Flächenbereich der Projektion 22 darstellen und beispielsweise Teilsegmente des Bildmotivs gliedern oder kleine gewölbte Bereiche oder eine Schattierung mit feinen Linien darstellen.

Mit Bezug auf Fig. 3 wird für das erste Teilbild 20 (Fig. 3(a)) eine Grobwölbung G(x,y) vorgegeben, die die globale Wölbung des Bildmotivs innerhalb der flächigen Projektion 22 beschreibt. Diese Grobwölbung entspricht in der Regel nicht der tatsächlichen Wölbung eines real existierenden Objekts, sondern stellt eine einfache, großflächige Wölbung dar, die dem Bildmotiv seine grobe Dreidimensionalität verleiht.

Aus der Grobwölbung G(x,y) kann beispielsweise durch partielle Ableitung oder die Bildung von Differenzenquotienten an jeder Position (x,y) die lokale Steigung der Mikrospiegel 18 bestimmt werden, ohne dass hierzu irgendwelche Details des Bildmotivs 14 herangezogen werden müssen. Die Berechnung der Spiegelsteigungen kann daher außerordentlich rasch erfolgen. Die Figuren 3(b) und (c) zeigen zur Illustration die im Ausführungsbeispiel vorgegebene Grobwölbung G (Kurve 32) mit einer Wölbweite WG, sowie die sich aus der Grobwölbung ergebenden Spiegelsteigungen $S_G$ (Kurve 34) in x-Richtung, jeweils entlang der Linie 30 der Fig. 3(a).

Die Grobwölbung kann beispielsweise nach Art einer Kugelkalotte in jedem Schnitt 30 in x- und y-Richtung an einem Rand 36 des Bildmotivs mit einer bestimmten Steigung starten und am gegenüberliegenden Bildrand 38 mit einer entgegengesetzten Steigung enden, wobei die Steigung zwischen den beiden Bildrändern monoton ab- bzw. zunimmt. Außerhalb des Bereichs der Projektion 22 (weißer Außenbereich in Fig. 3(a)) weist das Bildmotiv keine grobe Wölbung auf, dort ist insbesondere G(x,y) = 0.

Mit Bezug auf Fig. 4 wird für das zweite Teilbild 24 (Fig. 4(a)) für jede der feinen Konturlinien 26 eine Feinwölbung fi(x,y) vorgegeben, wobei i=1...N ist, und N die Anzahl der vorgegebenen feinen Konturlinien darstellt. Für alle Konturlinien zusammen erhält man so eine Gesamtfeinwölbung, die durch

$$F(x,y) = \mathrm{Sum}_{i=1..N} \left[ f_i(x,y) \right]$$

gegeben ist.

Aus der Gesamtfeinwölbung F(x,y) kann wieder durch partielle Ableitung oder die Bildung von Differenzenquotienten an jeder Position (x,y) die erforderliche lokale Steigung der Mikrospiegel 18 berechnet werden. Da die Feinwölbungen fi(x,y) vorgegeben werden, müssen hierzu außer den Positionen der Konturlinien keine Details des Bildmotivs 14 herangezogen werden, so dass auch diese Berechnung sehr rasch erfolgen kann.

Die Feinwölbungen können insbesondere ihrer Art nach alle gleich ausgebildet sein und beispielsweise eine schmale Zylinderkalotte mit einer bestimmten, konstanten Breite bilden. In jedem Schnitt senkrecht zur Verlaufsrichtung der Konturlinien 26 starten die Feinwölbungen dann an einem Linienrand 46 mit einer bestimmten Steigung und enden am gegenüberliegenden Linienrand 48 mit der entgegengesetzten Steigung, wobei die Steigung zwischen den beiden Linienrändern monoton ab- bzw. zunimmt. Außerhalb des Bereichs der Konturlinien 26 (weiße Zwischen- und Außenbereiche in Fig. 4(a)) weist das Bildmotiv keine feine Wölbung auf, dort ist insbesondere F(x,y) = 0.

Figur 4(b) zeigt zur Illustration die im Ausführungsbeispiel erhaltene Gesamtfeinwölbung F (Kurve 40) entlang der Linie 30 der Fig. 4(a) in x-Richtung. Die Gesamtfeinwölbung enthält in diesem Schnitt fünf einzelne Konturlinien 42 gleicher Form, gleicher Wölbweite $W_F$ und gleicher Amplitude. Die Wölbweite $W_F$ der Konturlinien 42 beträgt dabei 5% der Wölbweite $W_G$ der gesamten Statue im Schnitt 30 (siehe Fig. 3(b)). Figur 4(c) zeigt die sich aus der Gesamtfeinwölbung ergebenden Spiegelsteigungen $S_F$ (Kurve 44) entlang der Linie 30 in x-Richtung.

Aus der Grobwölbung und der Gesamtfeinwölbung wird nun durch Addition und Normierung die gewünschte Gesamtreliefwölbung

$$R(x,y) = (G(x,y) + F(x,y))/2$$

für die Mikrospiegelanordnung berechnet und an jeder Spiegelposition (x,y) wird die erforderliche lokale Steigung $S_R$ der Mikrospiegel 18 durch partielle Ableitung oder die Bildung von Differenzenquotienten berechnet. Wie bereits erläutert, müssen zur Berechnung der Spiegelsteigungen $S_R = S_G + S_F$ außer der Position der Konturlinien keine Details des Bildmotivs 14 herangezogen werden, so dass die Berechnung sehr rasch erfolgen kann.

Das visuelle Erscheinungsbild 50 des kombinierten Reliefmotivs R(x,y) ist in Fig. 5(a) dargestellt. Figur 5(b) zeigt die gesamte Reliefwölbung R (Kurve 52) mit dem Grobwölbungsanteil 32 und dem Anteil 42 der einzelnen Konturlinien, und Fig. 5(c) zeigt die sich aus der Reliefwölbung R ergebenden lokalen Spiegelsteigungen $S_R$ (Kurve 54) in x-Richtung entlang der Linie 30 der Fig. 5(a).

Aus der Reliefwölbung R(x,y) bzw. den sich daraus ergebenden lokalen Spiegelsteigungen $S_R$ wird dann in an sich bekannter Weise ein reflektiver Flächenbereich mit einer Vielzahl an geneigten reflektiven Mikrospiegeln erzeugt, der einem Betrachter das in Fig. 5(a) dargestellte Erscheinungsbild bietet.

Durch die Kombination der Grobwölbung mit den Feinwölbungen der Konturlinien wirkt das erzeugte Bildmotiv sehr detailreich und realistisch, ohne dass ein aufwendiges vollständiges Höhenprofil des Bildmotivs erzeugt werden müsste. Vielmehr werden grobe und feine Bildinhalte des Bildmotivs zunächst voneinander getrennt und dann in unterschiedlicher Weise jeweils pauschaliert behandelt: Die groben Bildinhalte werden durch eine einzige vorgegebene und einfach strukturierte Grobwölbung G dargestellt. Die feinen Bildinhalte werden lediglich in Form einer Vielzahl feiner Konturlinien berücksichtigt, die durch vorgegebene Feinwölbungen $f_i$ dargestellt werden. Die Komplexität des realen Bildmotivs wird auf diese Weise drastisch reduziert und einer raschen Berechnung zugänglich gemacht. Dennoch kann dem Betrachter ein Motiv präsentiert werden, das neben einer groben Gesamtwölbung auch fein gewölbte Detailstrukturen aufweist und daher eine realistische Gesamtwirkung erzeugt.

Darüber hinaus ermöglicht die Zerlegung in zwei Teilbilder auch die Erzeugung besonderer visueller Effekte, da die Grobwölbung und die Feinwölbungen auf unterschiedliche Weise miteinander kombiniert werden können.

In einer ersten Ausgestaltung wird die Reliefwölbung beispielsweise durch eine gewichtete Kombination von Grobwölbung und Gesamtfeinwölbung erhalten:

$$R(x,y) = a*G(x,y) + b*F(x,y),$$

mit reellen, nicht-negativen Parametern a und b, für die zur Normierung a+b=1 gefordert werden kann. Im Fall a=b=0,5 ergibt sich das oben bereits ausführlich beschriebene und in Fig. 5(a) dargestellte Gesamtrelief.

Es ist allerdings auch möglich, entweder die groben Bildanteile stärker zu gewichten (a>b) oder die filigranen Bildanteile stärker zu gewichten (a<b). Beispielsweise ergibt sich durch die Wahl a=0,7 und b=0,3 ein visueller Bildeindruck, der von der groben Gesamtwölbung dominiert wird und in dem die feinen Konturlinien nur schwach in Erscheinung treten. Umgekehrt ist das Bildmotiv 14 bei einer Wahl von a=0,3 und b=0,7 großflächig nur wenig gewölbt, während die Konturlinien 26 stark ausgeprägt sind und das Erscheinungsbild dominieren.

In einer anderen Ausgestaltung kann durch eine geeignete Kombination von Grobwölbung und Gesamtfeinwölbung der Eindruck einer Wachssiegelprägung erhalten werden, bei der die Kontur bzw. die innere Textur des Bildmotivs reliefartig eingeprägt erscheint. Dies kann beispielsweise dadurch erreicht werden, dass Grobwölbung und Gesamtfeinwölbung mittels

$$R(x,y) = (G(x,y) - F(x,y))/\mathrm{Max}_{x,y}[G(x,y) - F(x,y)]$$

kombiniert werden. Die Gesamtfeinwölbung wird dabei von der Grobwölbung abgezogen und anschließend durch Division mit dem Maximum der vorkommenden Werte auf 1 renormiert.

Um den Eindruck einer Prägung zu verstärken, kann in diesem Fall die Projektion des vorgegebenen Bildmotivs vergrößert und weichgezeichnet werden, um sicherzustellen, dass der äußere Bereich der Projektion nicht mit äußeren Konturlinien zusammenfällt. Beispielsweise kann die Projektion des Bildmotivs in einem ersten Schritt um 5 % bis 15% bei fixiertem Seitenverhältnis vergrößert und die Projektion anschließend mit Stilisierungsfiltern (Adobe Illustrator oder GIMP) nachbearbeitet werden.

Bei einer weiteren, besonders bevorzugten Ausgestaltungsvariante werden die Grobwölbung und Gesamtfeinwölbung nicht im gesamten reflektiven Flächenbereich sondern nur in Teilbereichen miteinander kombiniert. Beispielsweise kann

$$R(x,y) = (G(x,y) + F(x,y))/2 \quad \text{im Bereiche der Konturlinien und}$$
$$R(x,y) = G(x,y) \quad\quad\quad\quad\quad \text{im Bereiche der Projektion}$$

gewählt werden. Eine Normierung erfolgt damit nicht in den Bereichen, in denen nur die Grobwölbung vorliegt. Dadurch erscheinen die Konturlinien zwar nach oben gewölbt, sind jedoch innerhalb der gewölbten Projektion leicht versenkt bzw. eingebettet, während das erzeugte Bildmotiv insgesamt plastischer wirkt.

Illustrierende Ausgestaltungen:

Ausgestaltung 1: Verfahren zur Herstellung eines Sicherheitselements mit einem reflektiven Flächenbereich, der für einen Betrachter als dreidimensionales Reliefmotiv mit einer gegenüber seiner tatsächlichen Raumform vor- und/oder zurückspringende Oberfläche in Form eines vorgegebenen dreidimensionalen Bildmotivs wahrnehmbar ist, wobei bei dem Verfahren

- aus dem vorgegebenen dreidimensionalen Bildmotiv in einer x-y-Ebene ein erstes zweidimensionales Teilbild mit einer flächigen Projektion des Bildmotivs und ein zweites zweidimensionales Teilbild mit feinen Konturlinien innerhalb der Projektion des Bildmotivs erzeugt werden,

- für das erste Teilbild für die flächige Projektion des Bildmotivs eine Grobwölbung G(x,y) vorgegeben wird,

- für das zweite Teilbild für jede der feinen Konturlinien eine Feinwölbung fi(x,y) vorgegeben wird, wobei i=1...N ist, und N die Anzahl der vorgegebenen feinen Konturlinien ist,

- aus der Grobwölbung G(x,y) und den Feinwölbungen fi(x,y) eine Reliefwölbung

$$R(x,y) = M[G(x,y), f_i(x,y)]$$

mit einem Masterfunktional M berechnet wird, das eine Verknüpfung der Grobwölbung G(x,y) und der N Feinwölbungen $f_i(x,y)$, mit i=1...N, beschreibt, und

- ein reflektiver Flächenbereich mit einer Vielzahl an geneigten reflektiven Mikrospiegeln mit einer jeweils durch die Reliefwölbung R(x,y) bestimmten lokalen Spiegelsteigung erzeugt wird.

Ausgestaltung 2: Verfahren nach Ausgestaltung 1, **dadurch gekennzeichnet, dass** die vorgegebenen feinen Konturlinien alle durch gleich ausgebildete Feinwölbungen dargestellt werden, insbesondere durch Feinwölbungen in Form einer schmalen Zylinderkalotte.

Ausgestaltung 3: Verfahren nach Ausgestaltung 1, **dadurch gekennzeichnet, dass** zwei oder mehrere Konturlinienarten mit unterschiedlicher Breite und/oder unterschiedlichem Querschnittsprofil vorgegeben werden, um dickere und dünnere Konturlinien bzw. visuell unterschiedlich wirkende Konturlinien darzustellen.

Ausgestaltung 4: Verfahren nach wenigstens einer der Ausgestaltungen 1 bis 3, **dadurch gekennzeichnet, dass** zumindest in einem Teilgebiet eine Grobwölbung G(x,y) vorgegeben wird, die für jeden Schnitt x=const und y=const höchstens zwei Extrema, vorzugsweise höchstens ein Extremum aufweist.

Ausgestaltung 5: Verfahren nach wenigstens einer der Ausgestaltungen 1 bis 3, **dadurch gekennzeichnet, dass** die flächige Projektion des Bildmotivs durch eine Kurvendarstellung mit einer Vorgabekurve gebildet wird, wobei eine Grobwölbung G(x,y) vorgegeben wird, die für jeden Schnitt senkrecht zur Vorgabekurve der Kurvendarstellung höchstens zwei Extrema, vorzugsweise höchstens ein Extremum aufweist.

Ausgestaltung 6: Verfahren nach Ausgestaltung 5, **dadurch gekennzeichnet, dass** die Kurvendarstellung als Vorgabekurve alphanumerische Zeichen, Symbole oder geometrische Formen, insbesondere einen Kreis, ein Oval, ein Dreieck, ein Rechteck, ein Sechseck, oder eine Sternform, zeigt.

Ausgestaltung 7: Verfahren nach wenigstens einer der Ausgestaltungen 1 bis 6, **dadurch gekennzeichnet, dass** die Breite der feinen Konturlinien im zweiten Teilbild kleiner als 30%, bevorzugt kleiner als 25%, besonders bevorzugt kleiner als 10%, und insbesondere kleiner als 5% des größten Durchmessers der flächigen Projektion des ersten Teilbilds gewählt wird.

Ausgestaltung 8: Verfahren nach wenigstens einer der Ausgestaltungen 1 bis 7, **dadurch gekennzeichnet, dass** die Wölbweite der Feinwölbungen fi(x,y) kleiner als 30%, bevorzugt kleiner als 25%, besonders bevorzugt kleiner als 10%, und insbesondere kleiner als 5% der Wölbweite der Grobwölbung G(x,y) gewählt wird.

Ausgestaltung 9: Verfahren nach wenigstens einer der Ausgestaltungen 1 bis 8, **dadurch gekennzeichnet, dass** die Mikrospiegel in dem reflektiven Flächenbereich in einem periodischen Raster mit einer Periodenlänge zwischen 4 μm und 100 μm, vorzugsweise zwischen 5 μm und 30 μm erzeugt werden.

Ausgestaltung 10: Verfahren nach wenigstens einer der Ausgestaltungen 1 bis 9, **dadurch gekennzeichnet, dass** die Mikrospiegel mit einer Kantenlänge zwischen 4 μm und 100 μm, vorzugsweise zwischen 5 μm und 30 μm

erzeugt werden.

Ausgestaltung 11: Verfahren nach wenigstens einer der Ausgestaltungen 1 bis 10, **dadurch gekennzeichnet, dass** die Mikrospiegel mit einer Ganghöhe von weniger als 20 $\mu$m, insbesondere weniger als 10 $\mu$m erzeugt werden.

Ausgestaltung 12: Verfahren nach wenigstens einer der Ausgestaltungen 1 bis 11, **dadurch gekennzeichnet, dass** die Mikrospiegel als Reliefstruktur in einer Prägelackschicht oder einer prägbaren Folie erzeugt werden, und dass die Reliefstruktur mit einer Reflexionsschicht versehen wird.

Ausgestaltung 13: Verfahren nach wenigstens einer der Ausgestaltungen 1 bis 12, **dadurch gekennzeichnet, dass** die Reliefwölbung aus der Grobwölbung G(x,y) und den Feinwölbungen fi(x,y) zumindest in einem Teilgebiet mit der Beziehung

$$R(x,y) = a*G(x,y) + b*Sum_{i=1..N}[f_i(x,y)]$$

berechnet wird, wobei a und b reelle, nichtnegative Parameter sind, für die vorzugsweise a+b=1 gilt.

Ausgestaltung 14: Verfahren nach wenigstens einer der Ausgestaltungen 1 bis 13, **dadurch gekennzeichnet, dass** die Reliefwölbung aus der Grobwölbung G(x,y) und den Feinwölbungen fi(x,y) zumindest in einem Teilgebiet mit der Beziehung

$$R(x,y) = (a*G(x,y) - b*Sum_{i=1..N}[f_i(x,y)])/maxR$$

berechnet wird, wobei a und b reelle Parameter sind und maxR = Max$_{x,y}$ [a*G(x,y) - b*Sum$_{i=1..N}$ [fi(x,y)]] ist.

Ausgestaltung 15: Verfahren nach Ausgestaltung 13 oder 14, **dadurch gekennzeichnet, dass** die Reliefwölbung aus der Grobwölbung G(x,y) und den Feinwölbungen fi(x,y) in unterschiedlichen Teilgebieten durch unterschiedliche Beziehungen R(x,y) berechnet wird, wobei insbesondere in einem ersten Teilgebiet a=b=0,5 und in einem zweiten Teilgebiet a=1 und b=0 oder eine andere von a=b=0,5 abweichende Parameterwahl verwendet wird.

Bezugszeichenliste

| 10 | Banknote |
|---|---|
| 12 | Sicherheitselement |
| 14 | Bildmotiv Statue |
| 16 | reflektiver Flächenbereich |
| 18 | Mikro spiegel |
| 20 | erstes Teilbild |
| 22 | Projektion |
| 24 | zweites Teilbild |
| 26 | Konturlinien |
| 30 | Schnittlinie |
| 32 | Kurve Grobwölbung |
| 34 | Kurve Spiegelsteigungen |
| 36, 38 | Ränder Bildmotiv |
| 40 | Kurve Gesamtfeinwölbung |
| 42 | Konturlinien |
| 44 | Kurve Spiegelsteigungen |
| 46, 48 | Linienränder |
| 50 | Erscheinungsbild |
| 52 | Kurve Reliefwölbung |
| 54 | Kurve Spiegelsteigungen |

**Patentansprüche**

1. Verfahren zur Herstellung eines Sicherheitselements mit einem reflektiven Flächenbereich, der für einen Betrachter als dreidimensionales Reliefmotiv mit einer gegenüber seiner tatsächlichen Raumform vor- und/oder zurückspringenden Oberfläche in Form eines dreidimensionalen Bildmotivs wahrnehmbar ist, wobei bei dem Verfahren

   - in einer x-y-Ebene ein erstes zweidimensionales Teilbild mit einer flächigen Projektion des Bildmotivs und ein zweites zweidimensionales Teilbild mit feinen Konturlinien innerhalb der Projektion des Bildmotivs erzeugt werden,
   - für das erste Teilbild für die flächige Projektion des Bildmotivs eine Grobwölbung G(x,y) vorgegeben wird,
   - aus der Grobwölbung G(x,y) eine lokale Spiegelsteigung SG(x,y) bestimmt wird,
   - für das zweite Teilbild für jede der feinen Konturlinien eine Feinwölbung fi(x,y) vorgegeben wird, wobei i=1...N ist, und N die Anzahl der vorgegebenen feinen Konturlinien ist,
   - aus der Feinwölbung fi(x,y) eine lokale Spiegelsteigung $S_{fi}(x,y)$ bestimmt wird,
   - aus der lokalen Spiegelsteigung SG(x, y) und den lokalen Spiegelsteigungen $S_{fi}(x, y)$ eine lokale Spiegelsteigung $S_R(x,y)$ des Reliefs

$$S_R(x,y) = M[S_G(x,y), S_{fi}(x,y)]$$

   mit einem Masterfunktional M berechnet wird, das eine Verknüpfung der lokalen Spiegelsteigung SG(x, y) und der N lokalen Spiegelsteigungen $S_{fi}(x, y)$, mit i=1...N, beschreibt, und
   - ein reflektiver Flächenbereich mit einer Vielzahl an geneigten reflektiven Mikrospiegeln mit einer lokalen Spiegelsteigung $S_R(x,y)$ erzeugt wird.

2. Verfahren nach Anspruch 1, **dadurch gekennzeichnet, dass** die vorgegebenen feinen Konturlinien alle durch gleich ausgebildete Feinwölbungen dargestellt werden, insbesondere durch Feinwölbungen in Form einer schmalen Zylinderkalotte.

3. Verfahren nach Anspruch 1, **dadurch gekennzeichnet, dass** zwei oder mehrere Konturlinienarten mit unterschiedlicher Breite und/oder unterschiedlichem Querschnittsprofil vorgegeben werden, um dickere und dünnere Konturlinien bzw. visuell unterschiedlich wirkende Konturlinien darzustellen.

4. Verfahren nach wenigstens einem der Ansprüche 1 bis 3, **dadurch gekennzeichnet, dass** zumindest in einem Teilgebiet eine Grobwölbung G(x,y) vorgegeben wird, die für jeden Schnitt x=const und y=const höchstens zwei Extrema, vorzugsweise höchstens ein Extremum aufweist.

5. Verfahren nach wenigstens einem der Ansprüche 1 bis 3, **dadurch gekennzeichnet, dass** die flächige Projektion des Bildmotivs durch eine Kurvendarstellung mit einer Vorgabekurve gebildet wird, wobei eine Grobwölbung G(x,y) vorgegeben wird, die für jeden Schnitt senkrecht zur Vorgabekurve der Kurvendarstellung höchstens zwei Extrema, vorzugsweise höchstens ein Extremum aufweist.

6. Verfahren nach Anspruch 5, **dadurch gekennzeichnet, dass** die Kurvendarstellung als Vorgabekurve alphanumerische Zeichen, Symbole oder geometrische Formen, insbesondere einen Kreis, ein Oval, ein Dreieck, ein Rechteck, ein Sechseck, oder eine Sternform, zeigt.

7. Verfahren nach wenigstens einem der Ansprüche 1 bis 6, **dadurch gekennzeichnet, dass** die Breite der feinen Konturlinien im zweiten Teilbild kleiner als 30%, bevorzugt kleiner als 25%, besonders bevorzugt kleiner als 10%, und insbesondere kleiner als 5% des größten Durchmessers der flächigen Projektion des ersten Teilbilds gewählt wird.

8. Verfahren nach wenigstens einem der Ansprüche 1 bis 7, **dadurch gekennzeichnet, dass** die Wölbweite der Feinwölbungen fi(x,y) kleiner als 30%, bevorzugt kleiner als 25%, besonders bevorzugt kleiner als 10%, und insbesondere kleiner als 5% der Wölbweite der Grobwölbung G(x,y) gewählt wird.

9. Verfahren nach wenigstens einem der Ansprüche 1 bis 8, **dadurch gekennzeichnet, dass** die Mikrospiegel in dem reflektiven Flächenbereich in einem periodischen Raster mit einer Periodenlänge zwischen 4 $\mu$m und 100 $\mu$m, vorzugsweise zwischen 5 $\mu$m und 30 $\mu$m erzeugt werden.

10. Verfahren nach wenigstens einem der Ansprüche 1 bis 9, **dadurch gekennzeichnet, dass** die Mikrospiegel mit einer Kantenlänge zwischen 4 $\mu$m und 100 $\mu$m, vorzugsweise zwischen 5 $\mu$m und 30 $\mu$m erzeugt werden.

11. Verfahren nach wenigstens einem der Ansprüche 1 bis 10, **dadurch gekennzeichnet, dass** die Mikrospiegel mit einer Ganghöhe von weniger als 20 $\mu$m, insbesondere weniger als 10 $\mu$m erzeugt werden.

12. Verfahren nach wenigstens einem der Ansprüche 1 bis 11, **dadurch gekennzeichnet, dass** die Mikrospiegel als Reliefstruktur in einer Prägelackschicht oder einer prägbaren Folie erzeugt werden, und dass die Reliefstruktur mit einer Reflexionsschicht versehen wird.

13. Verfahren nach wenigstens einem der Ansprüche 1 bis 12, **dadurch gekennzeichnet, dass** die lokale Spiegelsteigung $S_R(x,y)$ des Reliefs aus der lokalen Spiegelsteigung $SG(x, y)$ und den lokalen Spiegelsteigungen $S_{fi}(x, y)$ zumindest in einem Teilgebiet mit der Beziehung

$$S_R(x,y) = a*S_G(x,y) + b*Sum_{i=1..N}[S_{fi}(x,y)]$$

berechnet wird, wobei a und b reelle, nichtnegative Parameter sind, für die vorzugsweise a+b=1 gilt.

Fig. 1

(a)

(b)

Fig. 2

(a)

(b)

**Fig. 3**

(a) 20, 22, 30, 36, 38

(b) G, 32, 36, 38, $W_G$, ×

(c) $S_G$, 34, ×

**Fig. 4**

(a) 24, 30, 26

(b) F, 40, $W_F$, 42, 46, 48, ×

(c) $S_F$, 44, ×

**Fig. 5**

(a) 50, 30

(b) R, 42, 32, 52, ×

(c) $S_R$, 54, ×

Europäisches
Patentamt

European
Patent Office

Office européen
des brevets

# EUROPÄISCHER RECHERCHENBERICHT

Nummer der Anmeldung

EP 21 02 0217

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | WO 2006/013215 A1 (OPTAGLIO SRO [CZ]; RYZI ZBYNEK [CZ]; KOLARIK VLADIMIR [CZ]; KOTACKA LI) 9. Februar 2006 (2006-02-09) * Seite 22, Zeile 23 - Seite 25, Zeile 20; Ansprüche 33-64; Abbildungen 6-8 * ----- | 1-13 | INV. B42D25/425 B42D25/45 B42D25/324 B42D25/328 B42D25/373 |
| A | WO 2014/060089 A2 (GIESECKE & DEVRIENT GMBH [DE]) 24. April 2014 (2014-04-24) * Seite 6, Zeile 26 - Seite 21, Zeile 17; Ansprüche 1-18; Abbildungen 1-19 * ----- | 1-13 | B42D25/23 B42D25/24 B42D25/29 G02B5/09 G02B30/00 |
| A,D | WO 2011/066990 A2 (GIESECKE & DEVRIENT GMBH [DE]; FUHSE CHRISTIAN [DE]; RAHM MICHAEL [DE]) 9. Juni 2011 (2011-06-09) * das ganze Dokument * ----- | 1-13 | |
| A | WO 2016/065331 A2 (WAVEFRONT TECHNOLOGY INC [US]) 28. April 2016 (2016-04-28) * das ganze Dokument * ----- | 1-13 | |
| | | | **RECHERCHIERTE SACHGEBIETE (IPC)** B42D G02B |

Der vorliegende Recherchenbericht wurde für alle Patentansprüche erstellt

| Recherchenort | Abschlußdatum der Recherche | Prüfer |
|---|---|---|
| München | 3. August 2021 | Seiler, Reinhold |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes
Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 21 02 0217

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

03-08-2021

| Im Recherchenbericht angeführtes Patentdokument | Datum der Veröffentlichung | Mitglied(er) der Patentfamilie | Datum der Veröffentlichung |
|---|---|---|---|
| WO 2006013215 A1 | 09-02-2006 | AT 498849 T<br>EP 1782108 A1<br>ES 2361327 T3<br>PL 1782108 T3<br>US 2009091834 A1<br>WO 2006013215 A1 | 15-03-2011<br>09-05-2007<br>16-06-2011<br>29-07-2011<br>09-04-2009<br>09-02-2006 |
| WO 2014060089 A2 | 24-04-2014 | CN 104718469 A<br>DE 102012020257 A1<br>EP 2909660 A2<br>US 2015258838 A1<br>WO 2014060089 A2 | 17-06-2015<br>17-04-2014<br>26-08-2015<br>17-09-2015<br>24-04-2014 |
| WO 2011066990 A2 | 09-06-2011 | AU 2010327031 A1<br>BR 112012013451 A2<br>CA 2780934 A1<br>CN 102905909 A<br>DE 102009056934 A1<br>EP 2507069 A2<br>EP 3059093 A1<br>RU 2012127687 A<br>US 2013093172 A1<br>US 2018001690 A1<br>WO 2011066990 A2 | 21-06-2012<br>09-10-2018<br>09-06-2011<br>30-01-2013<br>09-06-2011<br>10-10-2012<br>24-08-2016<br>20-01-2014<br>18-04-2013<br>04-01-2018<br>09-06-2011 |
| WO 2016065331 A2 | 28-04-2016 | EP 3210069 A2<br>US 2016147076 A1<br>WO 2016065331 A2 | 30-08-2017<br>26-05-2016<br>28-04-2016 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2011066990 A2